# EUROPEAN PATENT APPLICATION

(11) **EP 4 456 450 A1**
(43) Date of publication of application: **30.10.2024**
(21) Application number: 24172863.3
(22) Date of filing: 26.04.2024
(51) Int. Cl.: H04B 10/61, H04B 10/63

(54) **COHERENT OPTICAL RECEIVER WITH TUNABLE LOCAL OSCILLATOR**

(30) Priority: 28.04.2023 US 202318309730
(71) Applicant: Nokia Solutions and Networks Oy, 02610 Espoo (FI)
(72) Inventor: Stern, Brian, Murray Hill, 07974-0636 (US); Borkowski, Robert, Murray Hill, 07974-0636 (US); Mahadevan, Amitkumar, Edison, 08837 (US)
(74) Representative: IP HILLS NV

(57) **Abstract**

Various example embodiments presented herein may be configured to support a passive optical network, PON, including an optical line terminal, OLT, and a set of optical network units, ONUs, where the OLT includes a coherent optical receiver configured to support reception of upstream optical bursts by the ONUs based on use of a wavemeter to control tuning of a local oscillator to track the wavelengths of the upstream optical bursts from the ONUs. In the coherent optical receiver, the local oscillator may be configured to provide a local oscillator signal for mixing with an upstream optical signal of an ONU and the wavemeter may be configured to determine a wavelength of the upstream optical signal of the ONU and instruct the local oscillator to tune the local oscillator signal to the wavelength of the upstream optical signal of the ONU. The coherent optical receiver may be used in other contexts.

## Description

### TECHNICAL FIELD

Various example embodiments relate generally to communication systems and, more particularly but not exclusively, to communication systems supporting communications using passive optical networks.

### BACKGROUND

In communication networks, various communications technologies may be used to support various types of communications.

### SUMMARY

In at least some example embodiments, an apparatus includes a local oscillator configured to provide a local oscillator signal for mixing with an upstream optical signal, and a wavemeter configured to determine a wavelength of the upstream optical signal and instruct the local oscillator to tune the local oscillator signal to the wavelength of the upstream optical signal. In at least some example embodiments, the local oscillator comprises a tunable laser. In at least some example embodiments, the wavemeter is configured to detect wavelengths within a range of wavelengths. In at least some example embodiments, the range of wavelengths is supported by a set of optical network units. In at least some example embodiments, the range of wavelengths has a width of about 20 nanometers. In at least some example embodiments, the wavemeter includes a set of interferometers, wherein one of the interferometers has a path length difference corresponding to a free spectral range approximately matching or exceeding a drift range of the upstream optical signal. In at least some example embodiments, the wavemeter is configured to ensure sufficient optical power such that a signal-to-noise ratio is sufficient to support measurement of the wavelength of the upstream signal without noise exceeding a variation corresponding to a target accuracy for measurement of the wavelength of the upstream signal. In at least some example embodiments, the local oscillator comprises a set of tunable filters including tunable phase shifters configured to support relatively fast tuning of the local oscillator. In at least some example embodiments, the wavemeter is configured to receive the local oscillator signal from the local oscillator, determine a wavelength of the local oscillator signal, and provide a management message to the local oscillator based on the wavelength of the local oscillator signal. In at least some example embodiments, the local oscillator is configured to receive the management message from the wavemeter and perform a management operation based on the management message received from the wavemeter. In at least some example embodiments, the apparatus includes a second wavemeter configured to receive the local oscillator signal from the local oscillator, determine a wavelength of the local oscillator signal, and provide a management message to the local oscillator based on the wavelength of the local oscillator signal. In at least some example embodiments, the local oscillator is configured to receive the management message from the second wavemeter and perform a management operation based on the management message received from the second wavemeter. In at least some example embodiments, the apparatus includes a coherent optical receiver frontend configured to receive the upstream optical signal and the local oscillator signal and provide an electrical signal. In at least some example embodiments, the coherent optical receiver frontend comprises at least one optical hybrid configured to receive the upstream optical signal and the local oscillator signal and provide interfering signals. In at least some example embodiments, the coherent optical receiver frontend comprises optical-to-electrical conversion circuitry configured to convert the interfering signals into an electrical signal. In at least some example embodiments, the apparatus includes analog-to-digital conversion circuitry configured to convert the electrical signal into a digitized signal. In at least some example embodiments, the apparatus includes digital signal processing circuitry configured to process the digitized signal to recover data from the upstream optical signal. In at least some example embodiments, the apparatus is configured to be disposed within an optical line terminal (OLT) of a passive optical network (PON) system.

In at least some example embodiments, a method includes providing, by a local oscillator, a local oscillator signal for mixing with an upstream optical signal, determining, by a wavemeter, a wavelength of the upstream optical signal, and instructing, by the wavemeter, the local oscillator to tune the local oscillator signal to the wavelength of the upstream optical signal. In at least some example embodiments, the local oscillator comprises a tunable laser. In at least some example embodiments, the wavemeter is configured to detect wavelengths within a range of wavelengths. In at least some example embodiments, the range of wavelengths is supported by a set of optical network units. In at least some example embodiments, the range of wavelengths has a width of about 20 nanometers. In at least some example embodiments, the wavemeter includes a set of interferometers, wherein one of the interferometers has a path length difference corresponding to a free spectral range approximately matching or exceeding a drift range of the upstream optical signal. In at least some example embodiments, the wavemeter is configured to ensure sufficient optical power such that a signal-to-noise ratio is sufficient to support measurement of the wavelength of the upstream signal without noise exceeding a variation corresponding to a target accuracy for measurement of the wavelength of the upstream signal. In at least some example embodiments, the local oscillator comprises a set of tunable filters including tunable phase shifters configured to support relatively fast tuning of the local oscillator. In at least some example embodiments, the method includes receiving, by the wavemeter, the local oscillator signal from the local oscillator, determining, by the wavemeter, a wavelength of the local oscillator signal, and providing, by the wavemeter to the local oscillator based on the wavelength of the local oscillator signal, a management message. In at least some example embodiments, the method includes receiving, by the local oscillator, the management message from the wavemeter and performing, by the wavemeter based on the management message received from the wavemeter, a management operation. In at least some example embodiments, the method includes receiving, by a second wavemeter, the local oscillator signal from the local oscillator, determining, by the second wavemeter, a wavelength of the local oscillator signal, and providing, by the second wavemeter to the local oscillator based on the wavelength of the local oscillator signal, a management message. In at least some example embodiments, the method includes receiving, by the local oscillator from the second wavemeter, the management message, and performing, by the local oscillator based on the management message received from the second wavemeter, a management operation. In at least some example embodiments, the method includes receiving, by a coherent optical receiver frontend, the upstream optical signal and the local oscillator signal and providing, by the coherent optical receiver frontend, an electrical signal. In at least some example embodiments, the coherent optical receiver frontend comprises at least one optical hybrid configured to receive the upstream optical signal and the local oscillator signal and provide interfering signals. In at least some example embodiments, the coherent optical receiver frontend comprises optical-to-electrical conversion circuitry configured to convert the interfering signals into an electrical signal. In at least some example embodiments, the method includes converting, by analog-to-digital conversion circuitry, the electrical signal into a digitized signal. In at least some example embodiments, the method includes processing, by digital signal processing circuitry, the digitized signal to recover data from the upstream optical signal. In at least some example embodiments, the method may be executed on an optical line terminal (OLT) of a passive optical network (PON) system.

In at least some example embodiments, an apparatus includes a coherent optical receiver frontend, a local oscillator, and a wavemeter. The coherent optical receiver frontend is configured to receive an upstream optical signal and, based on a local oscillator signal from the local oscillator, provide an electrical signal. The wavemeter is configured to receive a portion of the upstream optical signal, determine a wavelength of the upstream optical signal, and provide to the local oscillator an instruction to tune the local oscillator signal to the wavelength of the upstream optical signal. The local oscillator is configured to receive the instruction to tune the local oscillator signal to the wavelength of the upstream optical signal and generate the local oscillator signal based on the instruction to tune the local oscillator signal to the wavelength of the upstream optical signal. In at least some example embodiments, the local oscillator comprises a tunable laser. In at least some example embodiments, the wavemeter is configured to detect wavelengths within a range of wavelengths. In at least some example embodiments, the range of wavelengths is supported by a set of optical network units. In at least some example embodiments, the range of wavelengths has a width of about 20 nanometers. In at least some example embodiments, the wavemeter includes a set of interferometers, wherein one of the interferometers has a path length difference corresponding to a free spectral range approximately matching or exceeding a drift range of the upstream optical signal. In at least some example embodiments, the wavemeter is configured to ensure sufficient optical power such that a signal-to-noise ratio is sufficient to support measurement of the wavelength of the upstream signal without noise exceeding a variation corresponding to a target accuracy for measurement of the wavelength of the upstream signal. In at least some example embodiments, the local oscillator comprises a set of tunable filters including tunable phase shifters configured to support relatively fast tuning of the local oscillator. In at least some example embodiments, the wavemeter is configured to receive the local oscillator signal from the local oscillator, determine a wavelength of the local oscillator signal, and provide a management message to the local oscillator based on the wavelength of the local oscillator signal. In at least some example embodiments, the local oscillator is configured to receive the management message from the wavemeter and perform a management operation based on the management message received from the wavemeter. In at least some example embodiments, the apparatus includes a second wavemeter configured to receive the local oscillator signal from the local oscillator, determine a wavelength of the local oscillator signal, and provide a management message to the local oscillator based on the wavelength of the local oscillator signal. In at least some example embodiments, the local oscillator is configured to receive the management message from the second wavemeter and perform a management operation based on the management message received from the second wavemeter. In at least some example embodiments, the coherent optical receiver frontend comprises at least one optical hybrid configured to receive the upstream optical signal and the local oscillator signal and provide interfering signals. In at least some example embodiments, the coherent optical receiver frontend comprises optical-to-electrical conversion circuitry configured to convert the interfering signals into an electrical signal. In at least some example embodiments, the apparatus includes analog-to-digital conversion circuitry configured to convert the electrical signal into a digitized signal. In at least some example embodiments, the apparatus includes digital signal processing circuitry configured to process the digitized signal to recover data from the upstream optical signal. In at least some example embodiments, the apparatus is configured to be disposed within an optical line terminal (OLT) of a passive optical network (PON) system.

### BRIEF DESCRIPTION OF THE DRAWINGS

The teachings herein can be readily understood by considering the following detailed description in conjunction with the accompanying drawings, in which:
FIG. 1 depicts an example embodiment of a passive optical network configured to support coherent optical reception;
FIG. 2 depicts an example embodiment of a coherent optical receiver having a tunable local oscillator and a wavemeter for tuning the tunable local oscillator;
FIG. 3 depicts an example embodiment of a coherent optical receiver having a tunable local oscillator and a wavemeter for tuning the tunable local oscillator, where the wavemeter supports management of the tunable local oscillator;
FIG. 4 depicts an example embodiment of a coherent optical receiver having a tunable local oscillator and a wavemeter for tuning the tunable local oscillator, and further including a second wavemeter that supports management of the tunable local oscillator;
FIG. 5 depicts an example embodiment of a method for operating a coherent optical receiver having a tunable local oscillator and a wavemeter for tuning the tunable local oscillator;
FIG. 6 depicts an example embodiment for illustrating tuning of a tunable local oscillator for coherent optical reception in the passive optical network of FIG. 1; and
FIG. 7 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments presented herein may be configured to support a passive optical network (PON) including an optical line terminal (OLT) and a set of optical network units (ONUs) where the OLT includes a coherent optical receiver configured to support reception of upstream optical bursts by the ONUs based on use of a wavemeter to control tuning of a local oscillator to track the wavelengths of the upstream optical bursts from the ONUs. In the coherent optical receiver, the local oscillator may be configured to provide a local oscillator signal for mixing with an upstream optical signal received from an ONU and the wavemeter may be configured to determine a wavelength of the upstream optical signal and instruct the local oscillator to tune the local oscillator signal to the wavelength of the upstream optical signal. The wavemeter may be configured to support detection of a relatively wide range of wavelengths which may be received from the ONUs and, similarly, the tunable local oscillator may be configured to track the relatively wide range of wavelengths which may be received from the ONUs, thereby enabling the ONUs to operate without relatively costly wavelength control mechanisms (e.g., temperature control, feedback messaging, or the like) while still supporting relatively large data rates supported by current and future PON systems. It will be appreciated that these and various other example embodiments presented herein may be further understood by first considering various aspects of PON systems.

In general, a PON is a system commonly used by telecommunication network providers that brings fiber optic cables and signals all or most of the way to the end users. Depending on where the PON terminates, the system can be referred to in various ways, such as by using terms like fiber to the curb (FTTC), fiber to the building (FTTB), fiber to the home (FTTH), fiber to the antenna (FTTA), which typically are referred to more generally as FTTx. A PON system, as indicated above, typically includes an OLT located at a central office of the telecommunications network provider and several ONUs which are located near the end users. There are various types of PONs, including Gigabit PONs (GPONs), Ethernet-based PONs (EPONs) which operate based on Ethernet technology, and so forth. The International Telecommunication Union - Telecommunications Standardization Sector (ITU-T) has developed various standards for PONs, including the G.987 recommendation (for 10GPON, which also is known as XG-PON), G.9804 recommendation (for 50G PON, which also is known as Higher Speed PON). It is noted that formulation of newly proposed recommendation (e.g., Very High Speed PON (VHSP), which is expect to have a throughput goal of 100+ Gbps) also is currently under discussion.

With each PON release, the PON throughput has been steadily increasing while generally requiring support for the same infrastructure in order to support backward compatibility. This backward compatibility is an important element of PON which allows operators to avoid costly infrastructure changes with each PON release. ITU-T G.9804, or 50G PON, is the most recently completed recommendation relevant for PON, defining downstream and upstream operation up to 50 Gbps on a single wavelength. During development of this ITU-T G.9804 recommendation, it became clear that various new and complicated requirements, and associated tradeoffs between such requirements, may be needed with respect to the wavelength, optical power levels, and component properties in order to overcome various challenges (e.g., limited available bandwidth of electrical-to-optical (E-to-O) and optical-to-electrical (O-to-E) components, dispersion challenges, and so forth). Additionally, the ITU-T has already started discussion of the next PON recommendation - VHSP, with an expected throughput goal of 100+ Gbps - which is expected to result in adoption of new requirements and consideration of new technologies and capabilities and, thus, result in additional challenges in order to achieve guaranteed rates in a cost-effective manner.

Coherent communication schemes are quite likely to be employed in future PON systems in order to enable use of such higher guaranteed rates (e.g., 50 Gbps, 100 Gbps, and so forth). A coherent optical receiver typically employs a laser source as a local oscillator (LO). The LO provides, at a minimum, amplification through an LO-signal mixing process, and typically also acts as a phase reference for phase measurement. However, LO-signal mixing generally is only useful if the product of the LO-signal mixing (i.e., wavelength difference) is located within the photodetector electrical bandwidth. Photodetector electrical bandwidths currently assumed for 50G PON are around 19 GHz, which will restrict the practical limit of detuning between incoming signal and LO to remain below a few GHz (and most often below 1 GHz). It is noted that the 19 GHz bandwidth is less than 1% of the approximately 2.5THz optical frequency range (corresponding to a 20 nanometer (nm) range, when centered at 1550 nm) typically needed for upstream transmission using ONUs which do not support transmitter temperature control. Furthermore, the detuning between incoming signal and LO must remain within that 19 GHz bandwidth even if the wavelength of the incoming signal originating from one ONU changes during reception (such wavelength drifts due to temperature and/or modulation are common for non-stabilized sources) or changes between transmission slots of different ONUs (in this case wavelengths may be different because of manufacturing differences between different transmitters as well as different thermal conditions at the location of deployment).

As indicated above, a coherent optical receiver generally requires the LO wavelength to closely match the transmitted wavelength. While this may be addressed by requiring tighter control of the transmitter wavelength at the ONU via temperature control and/or by OLT-ONU messaging, these mechanisms conflict with the desire to keep ONU costs relatively low and to keep PON transmission overhead relatively low. Given the strong financial incentive to keep ONU costs relatively low, as well as to keep the associated power consumption of ONUs relatively low, it would be advantageous to remove the need for use of temperature control at the ONUs. While use of a high-quality wavelength-stabilized laser in an ONU transmitter may help relax the need for active tracking of the received wavelength at the OLT and/or OLT-ONU messaging to ensure that the LO wavelength closely matches the transmitted wavelength at the OLT, the high-quality wavelength-stabilized laser typically is the most expensive component of an ONU transmitter (and, thus, would significantly increase costs as compared with the non-tunable non-stabilized lasers typically employed by ONU transmitters in PON systems).

In order to keep ONU cost relatively low, as indicated above, it is desirable for the laser transmitter at the ONU not to employ temperature control. A consequence, however, is that the wavelength of the upstream transmission can vary over time for a given ONU and also may vary between different ONUs. Many PON systems, up to and including 50G PON (ITU-T G.9804) systems, have employed intensity-modulation direct-detection (IMDD) signaling with non-return-to-zero (NRZ) modulation. IMDD systems are inherently more tolerant to variations in wavelength. In such IMDD systems, the upstream transmission wavelength bands typically span up to 20 nm to allow for operation of ONUs which do not support transmitter temperature control. Additionally, coherent reception is envisioned as a next-system candidate for VHSP to fulfill the throughput goal (e.g., expect to be 100+ Gbps). However, various innovations are required in order to overcome the relatively high component costs associated with such coherent reception schemes (typically on the order of thousands of dollars) which are currently incompatible with PON cost targets (typically on the order of tens of dollars) and to significantly reduce power consumption in order to fit into the legislative norms and telecommunication network operator expectations.

Various example embodiments presented herein are configured to provide an OLT including a coherent optical receiver configured to operate as a burst mode receiver with a tunable LO configured to track wavelengths of incoming upstream burst mode signals from ONUs served by the OLT. The coherent optical receiver for the OLT that is serving the ONUs may include a tunable LO and a wavemeter, where the tunable LO is tuned based on wavelength measurements performed by the wavemeter on the incoming upstream burst mode signals from the ONUs in order to enable the tunable LO to track the wavelengths of incoming upstream burst mode signals from the ONUs. The tunable LO is tunable such that the wavelength of the tunable LO laser remains closely aligned to the wavelengths of the transmit lasers of the ONUs (e.g., within the bandwidth of the photodetector), such that the transmit lasers of the ONUs are free to drift (i.e., free to run without temperature control or other costly compensation mechanisms, thereby enabling support for higher rates while remaining cost-efficient). The tunable LO is rapidly tunable over a broad tuning range while supporting fine tuning granularity, thereby enabling the tunable LO to operate efficiently while minimizing upstream overhead. For example, the tunable LO may support a < 10 nanosecond (ns) tuning speed and a > 35 nm tuning range, although it will be appreciated that other tuning speeds and/or tuning ranges may be supported. The wavemeter is configured to rapidly and accurately monitor the wavelength of the ONU upstream burst received at the OLT, and to rapidly tune the tunable LO over a broad tuning range with fine tuning granularity. For example, the wavemeter may support measurement speeds matching the tuning speed of the tunable LO (e.g., nanosecond speed) while supporting a particular measurement accuracy (e.g., GHz or even sub-GHz accuracy), although it will be appreciated that other measurement speeds and/or measurement accuracies may supported. It will be appreciated that the relatively fast speed of the tunable LO and the wavemeter allows for tracking transients and ensures high efficiency in handling burst mode transmissions from the ONUs. It will be appreciated that these and various other example embodiments and advantages or potential advantages of example embodiments of a burst mode receiver with a tunable local oscillator may be further understood by way of reference to the various figures, which are discussed further below.

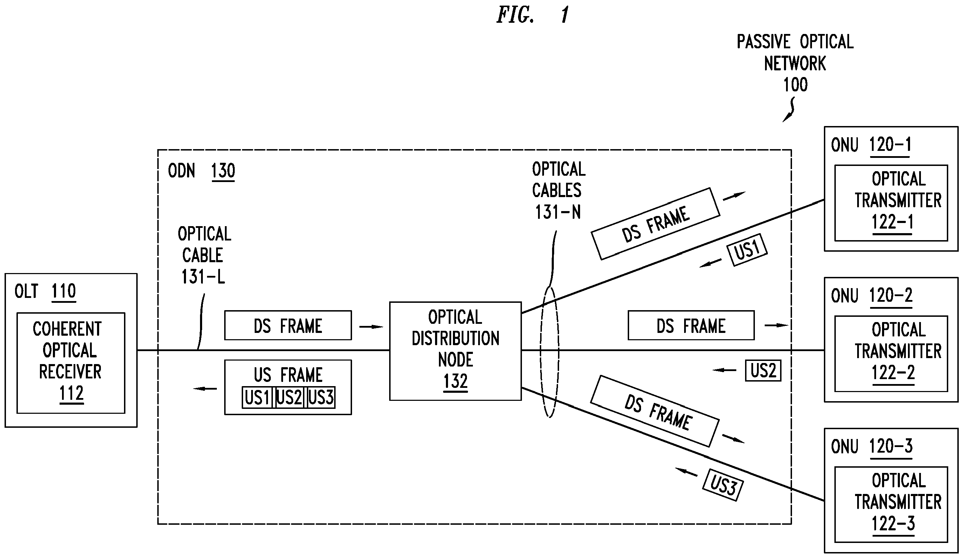

FIG. 1 depicts an example embodiment of a passive optical network configured to support coherent optical reception.

The passive optical network (PON) 100 is configured to use various types of optical technology to support communications for end users. The PON 100 may be configured to support various communication rates. For example, the PON 100 may be a 10G PON, a 50G PON, a 100G PON, or the like. For example, the PON 100 may be based on various International Telecommunication Union - Telecommunications Standardization Sector (ITU-T) recommendations for PONs, such as the G.987 recommendation (for 10G PON), the G.9804 recommendation (for 50G PON, which also is known as "Higher Speed PON"), newly proposed recommendations (e.g., VHSP, which is expect to have a throughput goal of 100+ Gbps), and so forth. The PON 100, as illustrated in FIG. 1 and discussed further below, includes various communication elements configured to support various communications based on passive optical networking techniques.

The PON 100, as illustrated in FIG. 1, includes an optical line terminal (OLT) 110 and a set of optical network units 120-1 to 120-3 (collectively, ONUs 120) interconnected by an optical distribution network (ODN) 130. The PON 100 may be a time division multiplexed (TDM) PON. The PON 100, in the downstream (DS) direction, may support DS communication from the OLT 110 to the ONUs 120 via the ODN 130 based on a point-to-multipoint (P2MP) architecture where the OLT 110 simultaneously broadcasts the DS optical signal to the ONUs 120 over the ODN 130 on one or more specified downstream wavelengths. The PON 100, in the upstream (US) direction, may support US communication from the ONUs 120 to the OLT 110 via the ODN 130 based on burst mode time division multiple access (TDMA) on one or more upstream wavelengths that are different from the specified downstream wavelength. It will be appreciated that, although primarily presented with respect to use of three ONUs 120, fewer or more ONUs 120 may be supported by the OTL 110. The operation of the elements of the PON 100 in supporting such DS communications and US communications is described further below.

The OLT 110 is configured to support communications for the ONUs 120. The OLT 110 may be located at a central office of a telecommunications network provider or any other suitable location. The OLT 110 is communicatively connected to the ODN 130 for supporting DS communications to the ONUs 120 and US communications from the ONUs 120. The OLT 110 may be communicatively connected to various communication devices (e.g., routers, switches, or the like) which are configured to provide connectivity to various communication networks (e.g., communication service provider networks, the Internet, or the like), which have been omitted for purposes of clarity. The OLT 110 may include an optical transmitter (which has been omitted for purposes of clarity) for transmitting DS optical signals toward the ONUs 120 and a coherent optical receiver (illustratively, coherent optical receiver 112) for receiving US optical signals from the ONUs 120. It will be appreciated that the OLT 110 may include various other elements configured to support DS communications and US communications within the PON 100.

The ONUs 120 are configured to support communications for various devices which may be located at locations at which the ONUs 120 are deployed (e.g., end user devices at end user locations in a FTTH scenario, radio antennas at antenna sites in an FTTA scenario, or the like), respectively. For example, in a FTTH scenario, the ONUs 120 may be communicatively connected to various communication devices (e.g., routers, switches, hubs, or the like) which are configured to serve various end user devices (e.g., smartphones, computers, smart televisions, gaming systems, smart appliances, IoT devices, or the like) which may be located at the end user locations at which the ONUs 120 are deployed, which have been omitted for purposes of clarity. For example, in an FTTA scenario, the ONUs 120 may be communicatively connected to radio antennas at antenna sites (which may or may not be owned by the same telco operator). The ONUs 120 are communicatively connected to the ODN 130 for supporting DS communications from the OLT 110 and supporting US communications to the OLT 110. The ONUs 120 each may include an optical receiver for receiving DS optical signals from the OLT 110 (which have been omitted for purposes of clarity) and an optical transmitter (illustratively, optical transmitters 122-1 to 122-3 in ONUs 120-1 to 120-3, respectively) for transmitting US optical signals toward the OLT 110. It will be appreciated that the ONUs 120 may include various other elements configured to support DS communications and US communications within the PON 100.

The ODN 130 is configured to support communications between the OLT 110 and the ONUs 120, including DS communications from the OLT 110 to the ONUs 120 and US communications from the ONUs to the OLT 110. The ODN 130 includes a set of optical cables 131 and an optical distribution node 132. The optical cables 131 include an optical cable 131-L between the OLT 110 and the optical distribution node 132. The optical cables 131 also include a set of optical cables 131-N1 to 131-N3 connected to the ONUs 120-1 to 120-3, respectively. The optical distribution node 132 is configured to operate as an optical splitter in the DS direction for splitting the DS optical signals from the OLT 110 for propagation toward the ONUs 120 and to operate as an optical combiner in the US direction for directing the US optical signals from the ONUs to the OLT 110. It will be appreciated that, although the ODN 130 is depicted as including only a single optical distribution node 132 (for purposes of clarity), the ODN 130 may include multiple optical distribution nodes in cascade. It will be appreciated that the ODN 130 may include various other optical communication elements which may be arranged in various ways.

The PON 100, as indicated above, is configured to support DS optical communications from the OLT 110 to the ONUs 120. The optical transmitter of the OLT 110 transmits downstream optical signals toward the ONUs 120 using the ODN 130. The downstream optical signals are sent over the optical cable 131-L and received by the optical distribution node 132. The optical distribution node 132 splits the downstream optical signals and sends the downstream optical signals over the optical cables 131-N1 to 131-N3 so that the downstream optical signals are received by each of the ONUs 120-1 to 120-3, respectively. The optical receivers of the ONUs 120 receive and process the downstream optical signals. In FIG. 1, this is represented by the downstream frame which is illustrated as being sent by the OLT 110 and received by each of the ONUs 120 (i.e., each of the ONUs 120 receives the same downstream optical signal from the OLT 110).

The PON 100, as indicated above, is configured to support US optical communications from the ONUs 120 to the OLT 110. The optical transmitters 122 of the ONUs 120 transmit upstream optical signals toward the OLT 110 using burst mode transmissions based on TDMA sharing of the ODN 130 (e.g., ONUs 120 transmits data as upstream optical bursts in designated time slots specified by the OLT 110 for the ONUs 120, respectively). The upstream optical signals are sent over the optical cables 131-N1 to 131-N3 and received by the optical distribution node 132. The optical distribution node 132 sends the upstream optical signals over the optical cable 131-L so that the upstream optical signals are received by the OLT 110. The upstream optical bursts from the ONUs 120 are assumed to be configured by the OLT 110 to arrive at the OLT 110 in a non-overlapping manner with distinct gaps between consecutive arriving bursts (e.g., each of the arriving upstream optical bursts is assumed to begin with an upstream physical layer synchronization block (e.g., preamble and delimiter) to allow for receiver alignment followed by upstream data). The coherent optical receiver 112 of the OLT 110 receives and processes the upstream optical signals. In FIG. 1, this is represented by the three upstream signals (denoted as "US 1", "US2" and "US3" sent by ONUs 120-1 to 120-3, respectively) being sent on the optical cables 131-N1 to 131-N3 and the upstream frame being sent on optical cable 131-N between the optical distribution node 132 and the OLT 110.

In the PON 100, the optical transmitters 122 of the ONUs 120 may transmit the upstream optical signals with a relatively wide range of wavelengths having various dynamic characteristics and the coherent optical receiver 112 of the OLT 110 is configured to rapidly detect and track the wavelengths of the upstream optical signals with a local oscillator, while accommodating the potentially wide range of wavelengths and the dynamic characteristics of the wavelengths, in a manner for supporting proper detection of the upstream optical signals by a photodetector configured to operate over a relatively narrow range of bandwidths.

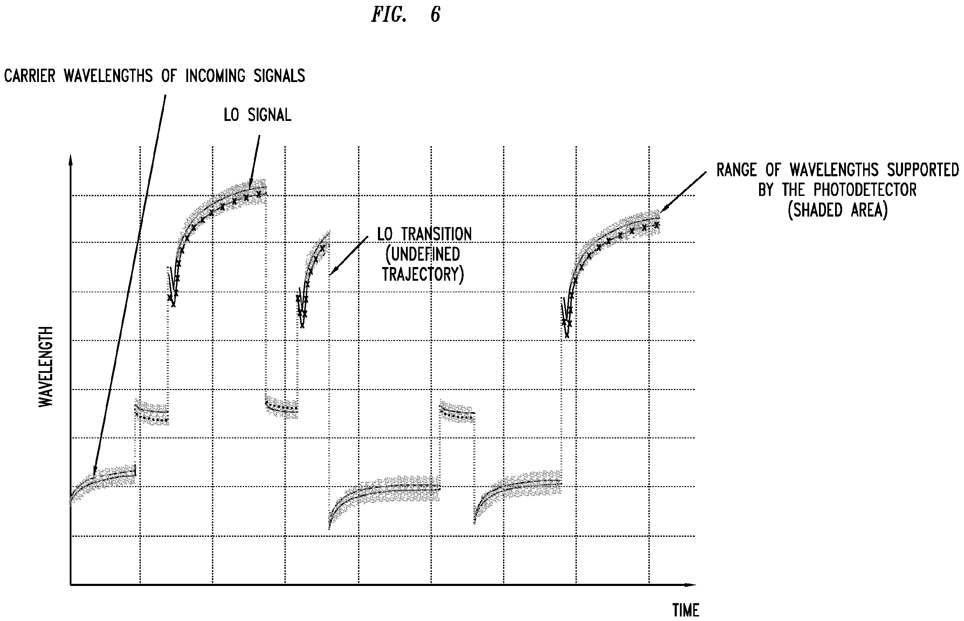

With respect to transmission of the upstream optical signals by the ONUs 120, the range of wavelengths to be supported by the optical transmitters 122 may be defined in a particular manner (e.g., being defined within a particular wavelength band having a particular width, such as being about 20 nm wide) and may have certain dynamic characteristics associated therewith. For example, the range of wavelengths of the optical transmitters 122 may be defined based on one or more standards (e.g., such as where G.9804.3 defines three wavelength bands for the upstream as 1260-1280 nm, 1290-1310 nm, and 1284-1288 nm; although it will be appreciated that various other suitable wavelength ranges may be used (e.g., other wavelength bands which may have similar or different widths) or may be defined in other ways. For example, the dynamic characteristics of the wavelengths of the optical transmitters 122 may include variations in wavelength by an optical transmitter 122 within a given upstream optical burst, variations in wavelength by an optical transmitter 122 between upstream optical bursts, variations in wavelengths between optical transmitters 122 for upstream optical bursts, or the like, as well as various combinations thereof. The variations in the wavelengths of the upstream optical signals within and between upstream optical bursts are illustrated by the graph in FIG. 6, which depicts variations in the wavelengths of the upstream optical bursts from the ONUs 120 over time. The range of wavelengths and dynamic variations within the range of wavelengths may be due to various factors, such as deviations due to differing transmitter types of the optical transmitters 122, manufacturing of the optical transmitters 122, differing modulation characteristics of the optical transmitters 122, operating temperatures of the optical transmitters 122 (which, in turn, may be based on factors such as the environments in which the optical transmitters 122 are deployed), or the like, as well as various combinations thereof.

With respect to reception of the upstream optical signals by the OLT 110, the range of wavelengths supported by the photodetector of the coherent optical receiver 112 for a given position of the LO of the coherent optical receiver 112 will be relatively small as compared to the range of wavelengths of the upstream optical signals of the ONUs 120. Here, the range of wavelengths supported by the photodetector refers to the wavelength range around the LO signal wavelength, for which the absolute value of the optical frequency difference between the upstream optical signals of the ONUs 120 and the LO signal of the LO is smaller (ideally, much smaller) than the electrical bandwidth of the photodetector. It is noted that the electrical bandwidth supported by the photodetector may vary for different receiver types (e.g., approximately 50 GHz for a long haul receiver, approximately 25 GHz for a datacenter receiver, or the like), and various electrical photodetector bandwidths may be supported. The coherent optical receiver 112 is configured to enable the tunable local oscillator of the coherent optical receiver 112 to closely follow the drift of each of the optical transmitters 122 of the ONUs 120, with the differences falling well below the electrical bandwidth of the photodetector. It is noted that the relationship between the range of wavelengths of the upstream optical signals of the optical transmitters 122 of the ONUs 120 and the range of wavelengths supported by the photodetector of the coherent optical receiver 112 for a given position of the LO of the coherent optical receiver 112 may be further understood by way of reference to the example of FIG. 6. The capability of the coherent optical receiver 112 to accommodate the relatively large range of wavelengths of the optical transmitters 122 of the ONUs 120, as well as the dynamic characteristics of the wavelengths of the optical transmitters 122 of the ONUs 120, enables the optical transmitters 122 of the ONUs 120 to operate without use of costly wavelength controls (e.g., temperature control, feedback messaging, and so forth), thereby enabling the PON 100 to cost-effectively support relatively high data rates of current and future PON releases (e.g., 50 Gbps, 100+ Gbps, and beyond).

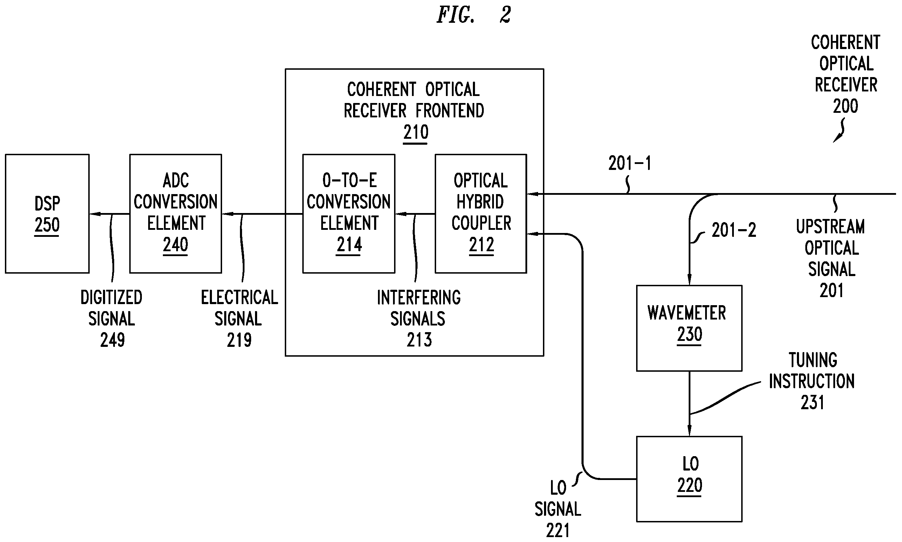

As indicated above, the coherent optical receiver 112 of the OLT 110 is configured to support coherent reception of the upstream optical signals from the ONUs 120. The coherent optical receiver 112 of the OLT 110 is configured to support coherent reception of the upstream optical signals from the ONUs 120 using a tunable local oscillator based on use of a wavemeter that is configured to rapidly and accurately determine the wavelengths of the upstream optical signals from the ONUs 120 and control the tuning of the local oscillator to track the wavelengths of the upstream optical signals from the ONUs 120. The coherent optical receiver 112 is configured to support coherent reception of the upstream optical signals from the ONUs 120 while accommodating the relatively wide range of possible wavelengths of the incoming upstream optical signals from the ONUs 120 as well as dynamic aspects of the incoming upstream optical signals from the ONUs 120 (e.g., time evolution of wavelength drift of the transmit lasers of the ONUs 120, characteristics of burst mode operation (e.g., thermal chirp), and so forth), thereby enabling the ONUs 120 to operate without various relatively costly wavelength control mechanisms (e.g., temperature control, feedback loops, and so forth). It will be appreciated that the operation of the coherent optical receiver 112 of the OLT 110 in supporting coherent reception of upstream optical burst mode signals transmitted by the optical transmitters 122 of the ONUs 120 may be further understood by way of reference to FIG. 2.

FIG. 2 depicts an example embodiment of a coherent optical receiver having a tunable local oscillator and a wavemeter for tuning the tunable local oscillator.

The coherent optical receiver 200 receives an upstream optical signal 201 and operates on the upstream optical signal 201 to determine the data transported by the upstream optical signal 201. The coherent optical receiver 200 may be used as the coherent optical receiver 112 of the OLT 110 of FIG. 1 for receiving upstream optical signals from the ONUs 120 and operating on the upstream optical signals from the ONUs 120 to determine the data send by the ONUs 120. The coherent optical receiver 200 includes a coherent optical receiver frontend 210, a local oscillator (LO) 220, a wavemeter 230, an analog-to-digital (ADC) conversion element 240, and a digital signal processor (DSP) 250, which operate on the upstream optical signal 201 to determine the data transported by the upstream optical signal 201.

The coherent optical receiver frontend 210 receives the upstream optical signal 201 (as indicated by upstream optical signal portion 201-1). The coherent optical receiver frontend 210 also receives an LO signal 221 generated by the LO 220. The coherent optical receiver frontend 210 performs mixing of the upstream optical signal 201 and the LO signal 221 and outputs an electrical signal 219 which may be further processed to recover the data being transported by the upstream optical signal 201. The coherent optical receiver frontend 210 includes an optical hybrid coupler 212 and an O-to-E conversion element 214. The optical hybrid coupler 212 may include one or more optical hybrids, which may be implemented as 90-degree optical hybrids, 120-degree optical hybrids, 180-degree optical hybrids, or the like). The optical hybrid coupler 212 receives the upstream optical signal 201 and the LO signal 221 and provides interfering signals 213 to the O-to-E conversion element 214. The O-to-E conversion element 214 may include photodetectors, transimpedance amplifiers (TIAs), or the like, as well as various combinations thereof. The O-to-E conversion element 214 receives the interfering signals 213 from the optical hybrid coupler 212 and performs O-to-E conversion to provide the electrical signal 219. The ADC conversion element 240 receives the electrical signal 219 from the coherent optical receiver frontend 210 and digitizes the electrical signal 219 to provide a digitized signal 249. The DSP 250 receives the digitized signal 249 from the ADC conversion element 240 and processes the digitized signal 249, based on various DSP algorithms, to recover the data being transported by the upstream optical signal 201. It will be appreciated that, although primarily presented as individual signals for purposes of clarity, various signals between components of the coherent optical receiver may include sets of signals which may be sent over buses, respectively. The operation of the wavemeter 230 in supporting recovery of the data transported by the upstream optical signal 201 is discussed further below.

The wavemeter 230 also receives the upstream optical signal 201 (as indicated by the upstream optical signal portion 201-2). The upstream optical signal portion 201-2 may be generated by tapping a portion of the upstream optical signal 201 and directing the upstream optical signal portion 201-2 to the wavemeter 230. The wavemeter 230 determines the wavelength of the upstream optical signal 201 and provides a tuning instruction 231 to the LO 220 in order to tune the LO 220 to track the wavelength of the upstream optical signal 201. The determination of the wavelength of the upstream optical signal 201 may be based on determination of a measurement of the upstream optical signal 201 (e.g. using one or more photodiodes) and digital conversion of the measurement of the upstream optical signal 201 to a wavelength of the upstream optical signal (e.g., using digital conversion circuitry). The tuning instructions 231 may include an indication of the wavelength of the upstream optical signal 201 (e.g., an explicit indication of the value of the wavelength of the upstream optical signal 201, a value or other indicator which the LO 220 may use to determine the wavelength of the upstream optical signal 201, or the like). The LO 220 receives the tuning instruction 231 from the wavemeter 230 and tunes the LO signal 221 to track the wavelength of the upstream optical signal 201.

The wavemeter 230 may perform wavelength estimation and tuning control over the duration of the upstream optical signal 201. The wavemeter 230 may perform wavelength estimation and tuning control using continuous wavelength estimation and tuning control, discrete wavelength estimation and tuning control (e.g., using fixed duration intervals or variable duration intervals), or a combination thereof. The wavemeter 230 may perform wavelength estimation and tuning control over the duration of the upstream optical signal 201 for various purposes. For example, the wavemeter 230 may perform wavelength estimation and tuning control over the duration of the upstream optical signal 201 in order to track switches between ONUs / wavelengths within the upstream optical signal 201. For example, the wavemeter 230 may perform wavelength estimation and tuning control over the duration of the upstream optical signal 201 in order to accommodate any wavelength drift within an upstream burst included within the upstream optical signal 201. It will be appreciated that the wavemeter 230 may perform wavelength estimation and tuning control over the duration of the upstream optical signal 201 for tracking multiple such aspects of the upstream optical bursts included within the upstream optical signal 201. It will be appreciated that the wavemeter 230 may perform wavelength estimation and tuning control over the duration of the upstream optical signal 201 for various other purposes.

The wavemeter 230 may be configured to achieve various measurement speeds and measurement accuracies for supporting tracking of upstream optical bursts of the upstream optical signal 201. For example, the wavemeter 230 may be configured to support a measurement speed matching the tuning speed of the LO 220 while satisfying a given measurement accuracy. For example, the wavemeter 230 may be configured to achieve relatively fast measurement speeds with a particular measurement accuracy, thereby enabling tuning of the LO 220 to track upstream optical bursts of the upstream optical signal 201, by ensuring sufficient optical power such that the signal-to-noise ratio (SNR) is sufficient to make a measurement in that sampling period, without noise exceeding a variation that would correspond to degrade the accuracy beyond some value (e.g., 0.5 GHz, 1 GHz, or the like). It will be appreciated that the wavemeter 230 may be configured to support other measurement speeds and/or measurement accuracies.

The wavemeter 230 and the LO 220 may be implemented in various ways for supporting tuning of the LO signal 221 to track the wavelength of the upstream optical signal 201.

The wavemeter 230, as indicated above, may be implemented in various ways for supporting tuning of the LO signal 221 to track the wavelength of the upstream optical signal 201. For example, the wavemeter 230 may include a set of optical components and a set of electrical / digital components. The set of optical components may include various components which support measurements of the upstream optical signal portion 201-2. For example, the optical components may include a set of photodiodes configured to perform measurements of the upstream optical signal portion 201-2, a set of Mach-Zehnder interferometers (MZIs) where one of the MZIs has a path length difference corresponding to a free spectral range (FSR) approximately matching or exceeding a band of ONU transmission wavelengths (e.g., 20 nm), or the like, as well as various combinations thereof. The set of electrical / digital components may include various electrical / digital components configured to perform calculations on the measurements of the upstream optical signal portion 201-2 to determine the wavelength of the upstream optical signal 201 and configured to generate the tuning instruction 231 that is provided to the LO 220 to instruct the LO 220 to tune to the determined wavelength of the upstream optical signal 201. For example, the electrical / digital components may include conversion elements (e.g., analog-to-digital conversion units and/or digital-to-analog conversion units), a central processing unit (CPU) (e.g., including digital logical and controls, drivers, and so forth), a digital memory, or the like, as well as various combinations thereof. It will be appreciated that the wavemeter 230 may be implemented in various other ways for supporting tuning of the LO signal 221 to track the wavelength of the upstream optical signal 201.

The LO 220, as indicated above, may be implemented in various ways for supporting tuning of the LO signal 221 to track the wavelength of the upstream optical signal 201. For example, the LO 220 may include a set of electrical / digital components and a set of optical components. The set of electrical / digital components may include various components which support processing of the tuning instruction 231 from the wavemeter 230 to determine the manner in which to tune the LO signal 221 to the determined wavelength of the upstream optical signal 201. For example, the electrical / digital components may include a central processing unit (CPU) (e.g., including digital logical and controls, drivers, and so forth), conversion elements (e.g., analog-to-digital conversion units and/or digital-to-analog conversion units), a digital memory, or the like, as well as various combinations thereof. For example, the electrical / digital components may be configured to support tuning to the determined wavelength of the upstream optical signal 201, based on the tuning instruction 231 from the wavemeter 230, using a lookup table or analytical function which is configured to instruct the LO 220 as to the manner in which to tune to the determined wavelength of the upstream optical signal 201. The optical components may include various components which support tuning of the LO signal 221 to the determined wavelength of the upstream optical signal 201.

The LO 220, in at least some example embodiments, may include tunable filters that are designed to match the expected band of ONUs transmission wavelengths (e.g., 20 nm). The tunable filters may be implemented using tunable phase shifters based on an effect with a fast response time, for example an electro-optic or electronic carrier-based tuning. Here, the term "fast" may vary under different scenarios and conditions. For example, in certain contexts, the term "fast" may be less than 1000 ns, less than 100 ns, 1-10 ns, or may correspond to other suitable values or ranges. For example, in certain contexts, the term "fast" may be defined relative to the burst length (e.g., fast may be considered to correspond to a relatively small fraction of the burst length). For example, if the burst is 5000 ns, it would be preferable for the speed of the laser to be a small fraction of 5000 ns (e.g., 200 ns, 100 ns, 50 ns, or the like). It will be appreciated that the speed of the LO 220 may be defined in other ways.

It will be appreciated that the LO 220 may be implemented in various other ways for supporting tuning of the LO signal 221 to track the wavelength of the upstream optical signal 201.

It will be appreciated that the wavemeter 230 and/or the LO 220 may be implemented in various other ways for supporting tuning of the LO signal 221 to track the wavelength of the upstream optical signal 201.

It will be appreciated that the coherent optical receiver 200, although primarily presented herein as having specific elements which are implemented independently, may utilize various arrangements of the elements (e.g., the LO 220 and the wavemeter 230 may be integrated on the same silicon chip).

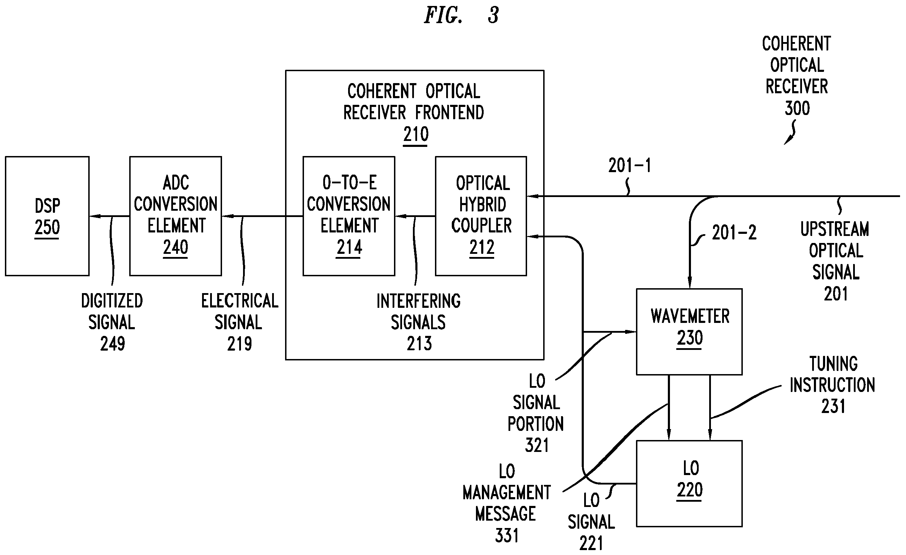

FIG. 3 depicts an example embodiment of a coherent optical receiver having a tunable local oscillator and a wavemeter for tuning the tunable local oscillator, where the wavemeter supports management of the tunable local oscillator. The coherent optical receiver 300 of FIG. 3 is similar to the coherent optical receiver 200 of FIG. 2, with the exception that the LO signal 221 output by the LO 220, in addition to being input to the coherent optical receiver frontend 210, also is input to the wavemeter 230 (illustratively shown as LO signal portion 321). The wavemeter 230 may detect the wavelength of the LO signal 221 based on LO signal portion 321 and provide an LO management message 331 to the LO 220 for use by the LO 220 in performing a management operation at the LO 220 (e.g., a monitoring operation for monitoring the LO 220, a calibration operation for calibrating the LO 220, a stabilization operation for stabilizing the LO 220, or the like, as well as various combinations thereof). This supports operation of the LO 220 to track the wavelengths of the upstream optical bursts from the ONUs. It will be appreciated that, although primarily presented with respect to an example embodiment in which both the upstream optical signal portion 201-2 and the LO signal portion 321 are input to the wavemeter 220 directly, in at least some example embodiments the upstream optical signal portion 201-2 and the LO signal portion 321 may be input into a switch that is configured to control providing of the upstream optical signal portion 201-2 and the LO signal portion 321 to the wavemeter 220.

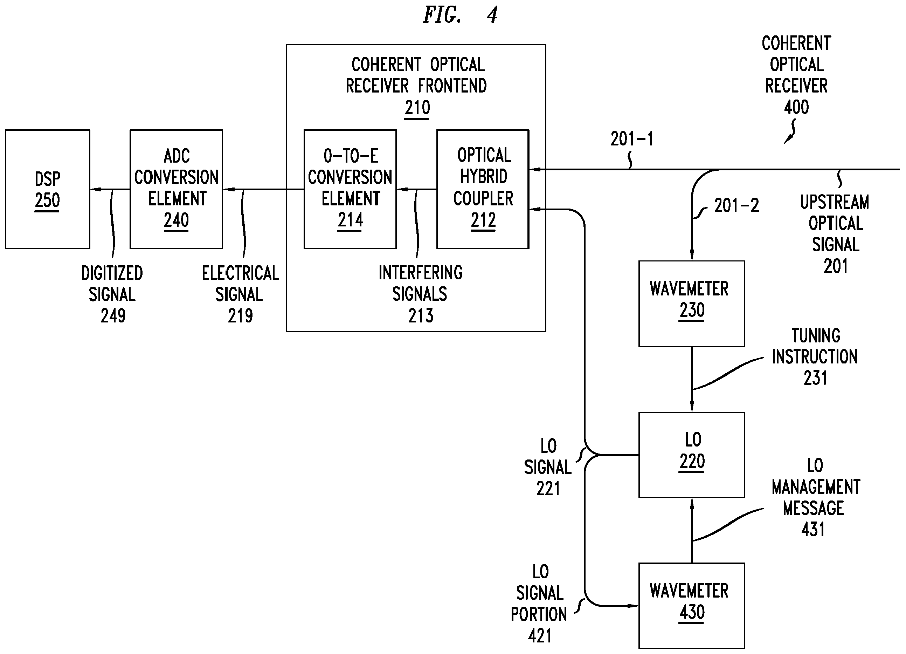

FIG. 4 depicts an example embodiment of a coherent optical receiver having a tunable local oscillator and a wavemeter for tuning the tunable local oscillator, and further including a second wavemeter that supports management of the tunable local oscillator. The coherent optical receiver 400 of FIG. 4 is similar to the coherent optical receiver 200 of FIG. 2, with the exception that the LO signal 221 output by the LO 220, in addition to being input to the coherent optical receiver frontend 210, also is input to a second wavemeter 430 (illustratively shown as LO signal portion 421). The second wavemeter 430 may detect the wavelength of the LO signal 221 based on the LO signal portion 421 and provide an LO management message 431 to the LO 220 for use by the LO 220 in performing a management operation at the LO 220 (e.g., a monitoring operation for monitoring the LO 220, a calibration operation for calibrating the LO 220, a stabilization operation for stabilizing the LO 220, or the like, as well as various combinations thereof). This supports operation of the LO 220 to track the wavelengths of the upstream optical bursts from the ONUs.

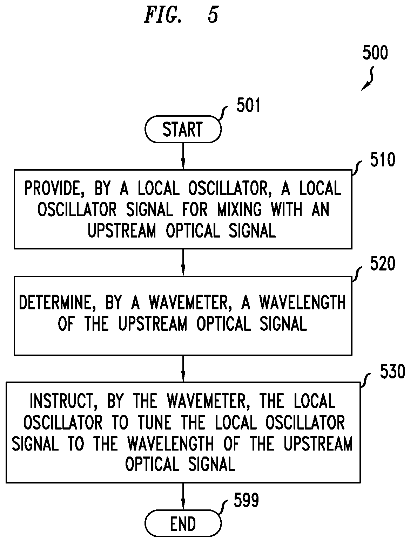

FIG. 5 depicts an example embodiment of a method for operating a coherent optical receiver having a tunable local oscillator and a wavemeter for tuning the tunable local oscillator. It will be appreciated that, although primarily presented herein as being performed serially, at least a portion of the functions of method 500 may be performed contemporaneously or in a different order than as presented in FIG. 5. At block 501, the method 500 begins. At block 510, provide, by a local oscillator, a local oscillator signal for mixing with an upstream optical signal. At block 520, determine, by a wavemeter, a wavelength of the upstream optical signal. At block 530, instruct, by the wavemeter, the local oscillator to tune the local oscillator signal to the wavelength of the upstream optical signal. At block 599, the method 500 ends. It will be appreciated that various other functions described within the context of the passive optical network of FIG. 1 and the coherent optical receivers of FIGs. 2-4 may be incorporated within the context of the method 400 of FIG. 4.

FIG. 6 depicts an example embodiment for illustrating tuning of a tunable local oscillator for coherent optical reception in the passive optical network of FIG. 1. As illustrated in FIG. 6, each of the ONUs 120 transmits upstream optical bursts which are successfully received by the coherent optical receiver based on use of a wavemeter to enable the LO to closely follow the drift of each of the ONUs 120. More specifically, FIG. 6 depicts upstream bursts transmitted by ONU 120-1 (with the first burst being denoted as ONU1 burst), ONU 120-2 (with the first burst being denoted as ONU2 burst), and ONU 120-3 (with the first burst being denoted as ONU3 burst). In each of the upstream optical bursts, the LO signal is depicted (indicated by the solid line), the carrier wavelength of the received upstream optical burst is depicted (indicated by the broken line), and the wavelength range supported by the photodetector of the coherent optical receiver is depicted (indicated by the shading). It is noted that, for purposes of clarity, the LO wavelength during the time when no incoming signal is present is not defined (it can assume any wavelength, however, for purposes of clarity, a straight line is depicted). It is further noted that, for purposes of clarity, the range of wavelengths supported by the photodetector on transition is not depicted (although it will be understood that the range of wavelengths is always present (including the times when no incoming signal is present) and will be located around the LO signal position. As may be understood from FIG. 6, for a given LO wavelength, the wavelength range supported by the photodetector of the coherent optical receiver, i.e. the electrical bandwidth of the photodetector of the coherent optical receiver, is significantly smaller than the possible variation of the wavelengths of the upstream optical signals. As may be understood from FIG. 6, the LO signal should be tuned during the reception of the incoming signal such that the incoming signal should, at all times, remain within the range of wavelengths supported by the photodetector. The coherent optical receiver includes a wavemeter that is configured to enable the tunable local oscillator to closely follow the drift of each of the ONUs 120, with the differences falling well within the wavelength range, i.e. electrical bandwidth, detected by the photodetector.

Various example embodiments of a coherent optical receiver with a tunable local oscillator may provide various advantages or potential advantages. For example, various example embodiments of a coherent optical receiver with a tunable local oscillator may be configured to enable ONUs to operate without temperature control and run freely (e.g., without requiring monitoring feedback signals to be provided from the OLT to the ONUs), and so forth. For example, various example embodiments of a coherent optical receiver with a tunable local oscillator may be configured to provide a coherent burst mode receiver supporting an LO that is controlled to track drifting ONUs with little or no compensation needed for the LO itself (although it will be appreciated that such compensation also may be applied). For example, various example embodiments of a coherent optical receiver with a tunable local oscillator may be configured to provide a coherent burst mode receiver supporting fast-tunable LO transient compensation where the wavelengths of the incoming bursts are unknown and operate over a wide wavelength range, thereby obviating the need for the wavelengths to operate on a fixed grid that is known in advance (i.e., obviating the need for the LO to be preconfigured to support only a limited number of well-known wavelengths). For example, various example embodiments of a coherent optical receiver with a tunable local oscillator may be configured to support determination of the wavelength over a significantly larger range of wavelengths (e.g., in line with a typical PON wavelength band of 20 nm, or over other suitable wavelength ranges) than typically possible with monitoring that can only detect deviations within the O/E receiver bandwidth (e.g., typically practically limited to tens of gigahertz, which translates to a sub-nm range). For example, various example embodiments of a coherent optical receiver with a tunable local oscillator may be configured to support increasing data rates for PON systems while focusing increased complexity in the OLT in order to achieve overall lower per-user cost and power consumption compared to solutions that require alignment of ONU upstream burst wavelengths to remain in the vicinity of the OLT LO during upstream transmissions. For example, various example embodiments of a coherent optical receiver with a tunable local oscillator may be configured to support a relatively large tuning range which is significantly beyond the capabilities of optical/electrical (O/E)-based monitoring without requiring use of an a priori defined wavelength grid, thereby allowing for uncooled free-running transmitter operation at the ONUs which significantly reduces ONU cost and power consumption while still enabling coherent detection for various PON systems including PON systems operating at relatively fast rates. Various example embodiments of a coherent optical receiver with a tunable local oscillator may provide various other advantages or potential advantages.

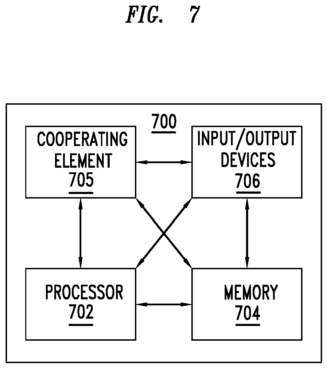

FIG. 7 depicts an example embodiment of a computer suitable for use in performing various functions presented herein.

The computer 700 includes a processor 702 (e.g., a central processing unit (CPU), a processor, a processor core of a processor, a subset of processor cores of a processor, a set of processor cores of a processor, or the like) and a memory 704 (e.g., a random access memory (RAM), a read-only memory (ROM), or the like). In at least some example embodiments, the computer 700 may include at least one processor and at least one memory storing instructions that, when executed by the at least one processor, cause the computer to perform various functions presented herein.

The computer 700 also may include a cooperating element 705. The cooperating element 705 may be a hardware device. The cooperating element 705 may be a process that can be loaded into the memory 704 and executed by the processor 702 to implement various functions presented herein (in which case, for example, the cooperating element 705 (including associated data structures) can be stored on a non-transitory computer readable medium, such as a storage device or other suitable type of storage element (e.g., a magnetic drive, an optical drive, or the like)).

The computer 700 also may include one or more input/output devices 706. The input/output devices 706 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 700 may represent a general architecture and functionality suitable for implementing functional elements described herein, portions of functional elements described herein, or the like, as well as various combinations thereof. For example, computer 700 may provide a general architecture and functionality that is suitable for implementing one or more elements presented herein.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
a local oscillator configured to provide a local oscillator signal for mixing with an upstream optical signal; and
a wavemeter configured to determine a wavelength of the upstream optical signal and instruct the local oscillator to tune the local oscillator signal to the wavelength of the upstream optical signal.

2. The apparatus according to claim 1, wherein the local oscillator comprises a tunable laser.

3. The apparatus according to any of claims 1 to 2, wherein the wavemeter is configured to detect wavelengths within a range of wavelengths.

4. The apparatus according to claim 3, wherein the range of wavelengths is supported by a set of optical network units.

5. The apparatus according to claim 3, wherein the range of wavelengths has a width of about 20 nanometers.

6. The apparatus according to any of claims 1 to 5, wherein the wavemeter includes a set of interferometers, wherein one of the interferometers has a path length difference corresponding to a free spectral range approximately matching or exceeding a drift range of the upstream optical signal.

7. The apparatus according to any of claims 1 to 6, wherein the wavemeter is configured to ensure sufficient optical power such that a signal-to-noise ratio is sufficient to support measurement of the wavelength of the upstream signal without noise exceeding a variation corresponding to a target accuracy for measurement of the wavelength of the upstream signal.

8. The apparatus according to any of claims 1 to 7, wherein the local oscillator comprises a set of tunable filters including tunable phase shifters configured to support relatively fast tuning of the local oscillator.

9. The apparatus according to any of claims 1 to 8, wherein the wavemeter is configured to receive the local oscillator signal from the local oscillator, determine a wavelength of the local oscillator signal, and provide a management message to the local oscillator based on the wavelength of the local oscillator signal.

10. The apparatus according to claim 9, wherein the local oscillator is configured to receive the management message from the wavemeter and perform a management operation based on the management message received from the wavemeter.

11. The apparatus according to any of claims 1 to 10, further comprising:
a second wavemeter configured to receive the local oscillator signal from the local oscillator, determine a wavelength of the local oscillator signal, and provide a management message to the local oscillator based on the wavelength of the local oscillator signal.

12. The apparatus according to claim 11, wherein the local oscillator is configured to receive the management message from the second wavemeter and perform a management operation based on the management message received from the second wavemeter.

13. The apparatus according to any of claims 1 to 12, wherein the apparatus is configured to be disposed within an optical line terminal, OLT, of a passive optical network, PON, system.

14. A method, comprising:
providing, by a local oscillator, a local oscillator signal for mixing with an upstream optical signal;
determining, by a wavemeter, a wavelength of the upstream optical signal; and
instructing, by the wavemeter, the local oscillator to tune the local oscillator signal to the wavelength of the upstream optical signal.

15. An apparatus, comprising:
a coherent optical receiver frontend, a local oscillator, and a wavemeter;
wherein the coherent optical receiver frontend is configured to receive an upstream optical signal and, based on a local oscillator signal from the local oscillator, provide an electrical signal;
wherein the wavemeter is configured to receive a portion of the upstream optical signal, determine a wavelength of the upstream optical signal, and provide to the local oscillator an instruction to tune the local oscillator signal to the wavelength of the upstream optical signal; and
wherein the local oscillator is configured to receive the instruction to tune the local oscillator signal to the wavelength of the upstream optical signal and generate the local oscillator signal based on the instruction to tune the local oscillator signal to the wavelength of the upstream optical signal.
